Europäisches Patentamt

European Patent Office

Office européen des brevets

(19)

(11) Veröffentlichungsnummer: **0 280 118 B1**

# EUROPÄISCHE PATENTSCHRIFT

(45) Veröffentlichungstag der Patentschrift: **18.03.92**

(51) Int. Cl.⁵: **F16G 1/08**, B65G 15/34

(21) Anmeldenummer: **88101989.7**

(22) Anmeldetag: **11.02.88**

(54) **Verfahren zur Herstellung eines Antriebs- oder Fördergurtes.**

(30) Priorität: **27.02.87 DE 3706404**

(43) Veröffentlichungstag der Anmeldung:
**31.08.88 Patentblatt 88/35**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
DE-A- 1 625 850      DE-A- 2 034 506
DE-A- 2 234 915      DE-A- 2 851 526
FR-A- 700 850        FR-A- 792 135
US-A- 4 518 647

(73) Patentinhaber: **PETER-BTR Gummiwerke Aktiengesellschaft**
**Geleitstrasse 11b Postfach 80 11 60-80**
**W-6450 Hanau 8(DE)**

(72) Erfinder: **Loose, Gerhard c/o Patentanwälte**
**KEIL & SCHAAFHAUSEN Ammelburgstrasse 34**
**W-6000 Frankfurt am Main 1(DE)**

(74) Vertreter: **Keil, Rainer A., Dipl.-Phys. Dr. et al**
**KEIL & SCHAAFHAUSEN Patentanwälte Eysseneckstrasse 31**
**W-6000 Frankfurt am Main 1(DE)**

# Beschreibung

Die Erfindung bezieht sich auf ein Verfahren zur Herstellung eines Antriebs- oder Fördergurtes aus Gummi oder gummiähnlichem Werkstoff mit einer ein ein- oder mehrschichtiges Textilgewebe aufweisenden Verstärkungseinlage, welche Kett- und Schußfäden aus Kunststoff, z.B. Polyester, Polyamid und/oder Aramid oder deren Mischungen aufweist, wobei man vor dem Weben des Textilgewebes eine Fadenummantelung aus Gummi oder gummiähnlichem Werkstoff aufbringt.

Zur Erreichung erhöhter Festigkeiten sind Antriebs- oder Fördergurte mit zwei oder mehreren Lagen bekannt, deren Gurtfestigkeit bis maximal 1.600 N/mm Breite reicht. Werte von 1.250 N/mm Breite sollten bei diesen jedoch möglichst nicht überschritten werden. Sollen größere Festigkeiten erreicht werden, muß die Anzahl der Verstärkungseinlagen und damit auch die Dicke des Gurtes noch weiter vergrößert werden, was unerwünscht große Antriebs- und/oder Umlenktrommeln erfordert.

Es sind auch sogenannte Einlagengurte bekannt, deren einzige Verstärkungseinlage zur Erzielung der erforderlichen Festigkeit allerdings eine Dicke von mehreren Millimetern aufweist. Verstärkungseinlagen auch solcher Einlagengurte bedürfen einer Einbettung in Kunststoff bzw. Gummi oder gummiähnlichen Werkstoff, um die erforderliche Bindung der Kett- und Schußfäden aneinander und damit eine hohe Lebensdauer, die gewünschte Dehnungsarmut sowie eine befriedigende Hakenausreißfestigkeit und -standzeit zu erreichen. Hierfür ist eine Durchtränkung der Verstärkungseinlage mit Kunststoff bzw. Gummi oder gummiähnlichem Werkstoff erforderlich. Die notwendige Durchtränkung der Verstärkungseinlage ist jedoch bei der Dicke der Verstärkungseinlage, die bei einem Einlagengurt benötigt wird, nur mit Kunststoffmischungen, bspw. Polyvinylchlorid, zu erzielen. Da Kunststoffmaterialien im Vergleich zu Gummi oder gummiähnlichem Werkstoff auf den Trommeln verhältnismäßig leicht rutschen und einen erhöhten Abrieb zeigen, sollen die Deckplattenschichten von Gurten hoher Qualität aber nach wie vor aus Gummi oder gummiähnlichem Werkstoff bestehen. Die Bindung von Deckplattenschichten aus Gummi oder gummiähnlichem Werkstoff an das Kunststoffmaterial, bspw. Polyvinylchlorid, der Einbettungsschicht der Verstärkungseinlage ist jedoch sehr kostspielig und schwierig. Es setzt u.a. die Verwendung natürlicher Fasern in Kett- und Schußrichtung der Verstärkungseinlage voraus. Die Verwendung von Naturfasern hat wiederum den Nachteil störender Feuchtigkeitsaufnahme, Verrottung und nachlassender Bindung. Besonders anfällig bleibt die Bindung in den Grenzflächen zwischen Kunststoff und Gummi bzw. gummiähnlichem Werkstoff.

Die Verwendung einer Verstärkungseinlage hinreichender Festigkeit und damit Dicke ausschließlich aus Kunststoffäden, wie Polyester-, Polyamid- und/oder Aramidfäden oder deren Mischungen, die in Gummi oder gummiähnlichem Werkstoff eingebettet ist, ist bei derartigen Gurten bisher deswegen nicht möglich, weil die Gummilösung in eine solche Verstärkungseinlage nicht eindringt, was jedoch für die Erzielung der angestrebten Lebensdauer, Dehnungsarmut sowie Hakenausreißfestigkeit und -standzeit erforderlich wäre.

In der DE-A-2 053 624 wird ein Gewebe für Riemen oder Förderbänder beschrieben, dessen mit einem Haftvermittler versehene Synthesefäden aus bspw. Polyester oder Polyamid mit einer vor dem Verweben aufgebrachten Ummantelung aus einem Kunststoff wie PVC oder Latex mit einer oder mehreren Haftkomponenten versehen sind. Neben oder anstelle von PVC kann bspw. auch Naturkautschuk als Mantelsubstanz verwendet werden. Durch die Beschichtung der Synthesefäden soll eine bessere Verbindung zwischen dem als Verstärkungseinlage dienenden Gewebe und den Deckplattenschichten aus Gummi oder gummiähnlichem Werkstoff erreicht werden, um die Lebensdauer des Fördergurtes zu erhöhen. Durch die Ummantelung gleichermaßen aller die Verstärkungseinlage bildenden Synthesefäden mit einem Naturkautschuk ist jedoch die Verwebbarkeit der Fäden beeinträchtigt, da die jeweils so beschichteten Kett- und Schußfäden beim Verweben zu stark aneinander haften.

Aufgabe der vorliegenden Erfindung ist es daher, ein Verfahren der eingangs genannten Art vorzuschlagen, mit welchem bei einer ausreichenden Bindung zwischen Verstärkungseinlage und Deckplattenschichten eine bessere Verwebbarkeit der Synthesefäden erreicht wird.

Diese Aufgabe wird erfindungsgemäß bei einem Verfahren der eingangs genannten Art dadurch gelöst, daß lediglich die Schußfäden des Textilgewebes ganz oder teilweise von einer Schicht aus Gummi oder gummiähnlichem Werkstoff umschlossen sind. Dadurch kommt es überraschenderweise einerseits beim Verweben nicht zu störenden Haftungserscheinungen zwischen Kett- und Schußfäden, andererseits ist aber dennoch durch die auf den Schußfäden aufgebrachte Ummantelung eine hervorragende Verbindung zu den Deckplattenschichten gewährleistet. Mit dem erfindungsgemäßen Verfahren sind Einlagen- Antriebs- oder Fördergurte auf einfache Weise herstellbar, welche eine aus Kunststoffäden bestehende und in Gummi oder gummiähnlichem Werkstoff eingebettete Verstärkungseinlage, also keine natürlichen Faserstoffe, aufweist und dessen Deckplattenschichten aus Gummi oder gummiähnlichem Werkstoff keine Verbindung zwischen Kunststoff- und Gummischichten erforderlich macht.

Mit der Erfindung wird das Problem der vollständigen Durchtränkung auch verhältnismäßig dikker Verstärkungseinlagen mittels Gummimischungen ohne Beeinträchtigung der Verwebbarkeit der Fäden beseitigt, weil sich hinreichend viel Gummi bzw. gummiähnlicher Werkstoff trotz Beschichtung lediglich der Schußfäden in den Zwischenräumen des Textilgewebes befindet. Ein so vorgefertigtes Textilgewebe kann einfach in Haftschichten aus Gummi oder gummiähnlichem Werkstoff eingebettet bzw. mit Deckplattenschichten abgedeckt und vulkanisiert werden.

Ein Tränken der Verstärkungseinlage ist nicht mehr erforderlich, auch nicht mehr die Schaffung einer Haftung von Gummischichten an einer Kunststoffschicht. Der Erfindungsgedanke ist nicht auf die Anwendung bei Einlagengurten, also Gurten mit nur einer einzigen ein- oder mehrschichtigen Verstärkungseinlage beschränkt, obgleich er hierfür in erster Linie gedacht ist. Unter Verwirklichung der Erfindung ist es z.B. auch möglich, bei Mehrlagengurten, also Gurten mit mehr als nur einer ein- oder mehrschichtigen Verstärkungseinlage, wenigstens eine Verstärkungseinlage einzusparen und die restliche(n) Verstärkungseinlage(n) zur Erzielung der gewünschten Gesamtgurtfestigkeit dicker auszubilden.

Besonders vorteilhaft ist es, wenn die die Schußfäden umschließende Schicht aus unvulkanisiertem oder nur vorvulkanisiertem Gummi oder gummiähnlichem Werkstoff besteht und erst nach dem Weben des Textilgewebes z.B. bei dem Vulkanisieren aufgelegter Haft- und/oder Deckplattenschichten aus Gummi oder gummiähnlichem Werkstoff mit diesen vulkanisiert oder ausvulkanisiert wird. Beim Vulkanisieren bzw. Ausvulkanisieren des Gurtes fließt der Gummi bzw. der gummiähnliche Werkstoff unter dem Vulkanisationsdruck vollständig in die im Gewebe verbliebenen freien Räume und füllt diese aus, so daß eine außerordentlich zuverlässige Gummibindung zwischen den Kettfäden untereinander, zwischen den Schußfäden untereinander sowie zwischen den Kett- und Schußfäden entsteht. Die Schicht aus Gummi oder gummiähnlichem Werkstoff, welche die Schußfäden schon vor dem Einweben in das Textilgewebe aufweisen soll, hat vorzugsweise eine Stärke von etwa 0,1 bis 1 mm. Die Schicht aus Gummi oder gummiähnlichem Werkstoff kann man bspw. dadurch aufbringen, daß man die zu beschichtenden Schußfäden vor dem Einweben in das Textilgewebe durch ein entsprechendes Gummierungsbad führt.

Es ist ferner erwünscht, ein mit einer gummifreundlichen Präparation versehenes Textilgewebe als Verstärkungseinlage zu verwenden und mit Haftschichten und/oder Deckplattenschichten aus Gummi oder gummiähnlichem Werkstoff abzudekken und dann zu vulkanisieren, so daß eine innige Verbindung mit den Gummischichten erfolgt. Mit derartigen gummifreundlichen Präparationen läßt sich eine besonders gute Haftung auch zwischen synthetischen Fäden und Gummi erzielen. Die Präparation erfolgt jedoch herkömmlicherweise bei verhältnismäßig hohen Temperaturen, bei welchen die Schicht aus Gummi oder gummiähnlichem Werkstoff, mit welcher die Schußfäden bereits vor dem Einweben in das Textilgewebe versehen worden sind, vollständig ausvulkanisiert würde. Ein Fließen des Gummis oder des gummiähnlichen Werkstoffs der vorher auf die Fäden aufgebrachten Schicht beim Einvulkanisieren in Haftschichten bzw. Deckplattenschichten aus Gummi oder gummiähnlichem Werkstoff wäre dann nicht mehr möglich.

Um diesen Nachteil zu beheben wird mit einem weiteren Erfindungsmerkmal vorgeschlagen, daß man die nicht mit einer Schicht aus Gummi oder gummiähnlichem Werkstoff umschlossenen Schuß- und Kettfäden bereits vor dem Einweben in das Textilgewebe mit der gummifreundlichen Präparation präpariert. Auf diese Weise wird die Schicht aus Gummi oder gummiähnlichem Werkstoff, mit welchen die Fäden, insbesondere Schußfäden, bereits vor dem Einweben in das Textilgewebe umschlossen sind, nicht durch vorzeitige, unerwünschte Vulkanisation beeinträchtigt.

Zur Lösung des genannten Problems ist es aber auch möglich, daß man die Präparation erst nach dem Weben der Verstärkungseinlage vornimmt, diese aber dann bei einer Temperatur von nicht höher als 130° C bei entsprechend verlängerter Präparationsdauer ausführt. Während herkömmlich die Präparation von Kunststoffgeweben, bspw. mittels Resorzinformaldehyd in wässriger Lösung bei etwa 180 - 200° C mit einer Präparationsdauer von etwa 60 bis 120 sec. erfolgt, um das Wasser des Präparationsbades zu kondensieren, wird entsprechend diesem weiteren Erfindungsvorschlag die Präparation nur bei einer Temperatur ausgeführt, die ein unerwünschtes Vulkanisieren der aus Gummi oder gummiähnlichem Werkstoff bestehenden Schichten der Fäden, insbesondere Schußfäden, vermeidet. Um bei diesen niedrigeren Temperaturen arbeiten zu können, ist dementsprechend eine größere Präparationsdauer erforderlich.

Da die vorgummierten Schußfäden klebrig sein können, wird mit der Erfindung ferner vorzugsweise vorgeschlagen, auf die vorgummierten Schußfäden nach dem Lösungsmittelverdampfen ein Trenn- oder Gleitmittel aufzubringen, das beim Vulkanisieren der Verstärkungseinlage mit den Haftschichten und/oder von Deckplattenschichten vom Gummi oder gummiähnlichen Werkstoff aufgenommen wird. Dadurch werden die Handhabung der Fäden und der daraus gewebten Verstärkungseinlagen bei der Herstellung der Gurte erleichtert, Bindungsschwierigkeiten der gummibeschichteten Fäden an dem Einbettungsgummi jedoch vermieden. Für eine derartige Nachbehandlung der vorgummierten Fäden mit einem Trenn- oder Gleitmittel eignen sich bspw. Zinkstearat od. dgl..

**Patentansprüche**

1. Verfahren zur Herstellung eines Antriebs- oder Fördergurtes aus Gummi oder gummiähnlichem Werkstoff mit einer ein ein- oder mehrschichtiges Textilgewebe aufweisenden Verstärkungseinlage, welche Kett- und Schußfäden aus Kunststoff, z.B. Polyester, Polyamid und/oder Aramid oder deren Mischungen aufweist, wobei man vor dem Weben des Textilgewebes eine Fadenummantelung aus Gummi oder einem gummiähnlichem Werkstoff aufbringt, dadurch gekennzeichnet, daß man vor dem Weben des Textilgewebes lediglich die Schußfäden ganz oder teilweise mit einer Schicht aus Gummi oder gummiähnlichem Werkstoff umschließt.

2. Verfahren nach Anspruch 1, dadurch gekennzeichnet, daß die die Schußfäden umschließende Schicht aus unvulkanisiertem oder nur vorvulkanisiertem Gummi oder gummiähnlichem Werkstoff besteht, welcher erst nach dem Weben des Textilgewebes, bspw. bei dem Vulkanisieren aufgelegter Haft- und/oder Deckplattenschichten mit diesen, vulkanisiert oder ausvulkanisiert wird.

3. Verfahren nach Anspruch 1 oder 2, bei welchem man ein mit einer gummifreundlichen Präparation versehenes Textilgewebe als Verstärkungseinlage verwendet und mit Haftschichten und/oder Deckplattenschichten aus Gummi oder gummiähnlichem Werkstoff abdeckt und dann vulkanisiert, dadurch gekennzeichnet, daß man die nicht mit einer Schicht aus Gummi oder gummiähnlichem Werkstoff umschlossenen Schuß- und Kettfäden bereits vor dem Einweben in das Textilgewebe präpariert.

4. Verfahren nach Anspruch 1 oder 2, bei welchem man das Textilgewebe vor dem Beschichten und Vulkanisieren mit Haftschichten und/oder Deckplattenschichten aus Gummi oder gummiähnlichem Werkstoff mit einer gummifreundlichen Präparation versieht, dadurch gekennzeichnet, daß man die Präparation bei einer Temperatur von nicht höher als etwa 130°C bei entsprechend verlängerter Präparationsdauer ausführt.

5. Verfahren nach einem der Ansprüche 1 bis 4, dadurch gekennzeichnet, daß man auf die für das Textilgewebe bestimmten Schußfäden nach dem Gummieren ein Trenn- oder Gleitmittel aufbringt, das bei dem Vulkanisieren mit den Haftschichten und/oder Deckplattenschichten aus Gummi oder gummiähnlichem Werkstoff vom Gummi oder gummiähnlichem Werkstoff der Schichten aufgenommen wird.

**Claims**

1. A process for the manufacture of a driving or conveyor belt of rubber or a rubber-like material and one or more layers of reinforcement inserts in the form of woven textiles in which the warp and weft strands of some synthetic material, for example polyester, polyamide and/or aramide or mixtures thereof, the strands being coated with rubber or a rubber-like material before weaving the textile, characterized in that before weaving the textile only the weft strands are entirely or partially coated with a layer of rubber or rubber-like material.

2. A process as in Claim 1, characterized in that the layer coating the weft strands consists of unvulcanized or only pre-vulcanized rubber or rubber-like material, which is only vulcanized or finish-vulcanized after weaving the textile, for example when vulcanizing the assembled adhesion and/or facing layers.

3. A process as in Claim 1 or 2, wherein a woven textile subjected to a rubber-compatible preparation is used as reinforcement insert, covered with adhesion layers and/or facing layers of rubber or a rubber-like material and then vulcanized, characterized in that the warp and weft strands not coated with a layer of rubber or rubber-like material are prepared before weaving into the textile.

4. A process as in Claim 1 or 2, wherein the woven textile is subjected to a rubber-compatible preparation before assembling and vulcanizing with adhesion layers and/or facing layers of rubber or rubber-like material, characterized in that the preparation is carried out at a temperature no higher than about 130 °C for a correspondingly extended preparation period.

5. A process as in any of Claims 1 to 4, characterized in that after rubberizing the weft strands intended for the woven textile they are coated with a separating or anti-friction agent, which is absorbed by the rubber or rubber-like material constituting the layers during vulcanization with the adhesion layers and/or facing layers of rubber or rubber-like material.

## Revendications

1. Procédé de fabrication d'une courroie d'entraînement ou de transport en caoutchouc ou en matériau similaire comportant une armature à une ou plusieurs couches de tissu textile, qui présente des fils de chaîne et des fils de trame en matière plastique, par exemple en polyester, polyamide et/ou aramide ou en mélange de ceux-ci, un revêtement de caoutchouc ou d'un matériau similaire étant appliqué sur le fil avant tissage du tissu textile, caractérisé en ce qu'on entoure uniquement les fils de trame, en totalité ou en partie, d'une couche de caoutchouc ou de matériau similaire avant le tissage du tissu textile.

2. Procédé selon la revendication 1, caractérisé en ce que la couche entourant les fils de trame est composée de caoutchouc ou de matériau similaire non vulcanisé ou seulement pré-vulcanisé, qui vulcanise ou opère sa vulcanisation complète seulement après le tissage du tissu textile, par exemple lors de la vulcanisation de couches d'adhérence et/ou de revêtement rapportées.

3. Procédé selon la revendication 1 ou 2 dans lequel on utilise comme armature un tissu textile ayant reçu un apprêt présentant une affinité avec le caoutchouc et on le recouvre de couches d'adhérence ou de revêtement en caoutchouc ou en matériau similaire et on le vulcanise, caractérisé en ce qu'on prépare les fils de chaîne et les fils de trame non revêtus d'une couche de caoutchouc ou de matériau similaire juste avant leur tissage dans le tissu textile.

4. Procédé selon la revendication 1 ou 2 dans lequel on applique un apprêt présentant une affinité avec le caoutchouc avant l'application et la vulcanisation des couches d'adhérence et/ou de revêtement en caoutchouc ou un matériau similaire, caractérisé en ce qu'on réalise la préparation à une température qui n'est pas supérieure à 130 °C environ avec un temps de préparation prolongé en conséquence.

5. Procédé selon l'une des revendications 1 à 4 caractérisé en ce qu'on applique sur les fils de trame destinés au tissu textile, après caoutchoutage, un agent de séparation qui, lors de la vulcanisation avec les couches d'adhérence et/ou les couches de revêtement en caoutchouc ou en matériau similaire, est absorbé par le caoutchouc ou le matériau similaire des couches.